(19) Europäisches Patentamt
European Patent Office
Office européen des brevets

(11) **EP 3 534 438 A1**

(12) **EUROPEAN PATENT APPLICATION**
published in accordance with Art. 153(4) EPC

(43) Date of publication:
**04.09.2019 Bulletin 2019/36**

(21) Application number: **17863677.5**

(22) Date of filing: **31.10.2017**

(51) Int Cl.:
***H01M 4/131*** *(2010.01)* ***H01M 4/13*** *(2010.01)*
***H01M 4/505*** *(2010.01)* ***H01M 4/525*** *(2010.01)*
***H01M 4/62*** *(2006.01)*

(86) International application number:
**PCT/JP2017/039297**

(87) International publication number:
**WO 2018/079821 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.10.2016 JP 2016213837**

(71) Applicants:
- **Sumitomo Chemical Company Limited**
  **Tokyo 104-8260 (JP)**
- **Tanaka Chemical Corporation**
  **Fukui-shi**
  **Fukui 910-3131 (JP)**

(72) Inventors:
- **KAGEURA, Jun-ichi**
  **Niihama-shi, Ehime 792-8521 (JP)**
- **KURITA, Hiroyuki**
  **Osaka-shi**
  **Osaka 554-8558 (JP)**
- **NAKAO, Kimiyasu**
  **Fukui-shi**
  **Fukui 910-3131 (JP)**
- **KOBAYASHI, Ryota**
  **Fukui-shi**
  **Fukui 910-3131 (JP)**

(74) Representative: **Vossius & Partner**
**Patentanwälte Rechtsanwälte mbB**
**Siebertstrasse 3**
**81675 München (DE)**

(54) **LITHIUM SECONDARY BATTERY POSITIVE ELECTRODE AND LITHIUM SECONDARY BATTERY**

(57) The present invention provides a lithium secondary battery positive electrode, wherein an electrode mixture layer that includes a positive electrode active material for a lithium secondary battery including secondary particles obtained by aggregating primary particles capable of being doped or de-doped with lithium ions being aggregated, a conductive material, and a binding agent and a current collector are laminated, and requirements (1) and (2) below are satisfied:
(1) 180-degree peeling strength between the current collector and the electrode mixture layer is equal to or greater than 140 N/m; and
(2) a BET specific surface area of the electrode mixture layer is equal to or greater than 4.0 $m^2/g$ and equal to or less than 8.5 $m^2/g$.

EP 3 534 438 A1

FIG. 3

301
302
303

## Description

[Technical Field]

The present invention relates to a lithium secondary battery positive electrode and a lithium secondary battery.
Priority is claimed on Japanese Patent Application No. 2016-213837, filed October 31, 2016, the content of which is incorporated herein by reference.

[Background Art]

A lithium secondary battery positive electrode has been used in a positive electrode active material for a lithium secondary battery. Practical use of lithium secondary batteries has already advanced not only for small-sized power sources for mobile phones and laptop PCs but also for intermediate or large-sized power sources for vehicles and electric power preservation.
In order to improve performance of lithium secondary batteries, such as battery capacitance, attempts focusing on peeling strength of a positive electrode active material for the lithium secondary batteries have been made (Patent Documents 1 to 5, for example).

[Citation List]

[Patent Literature]

[Patent Document 1]
Japanese Unexamined Patent Application, First Publication No. 2002-298928
[Patent Document 2]
Japanese Patent No. 4354214
[Patent Document 3]
PCT International Publication No. WO2011/010421
[Patent Document 4]
Japanese Unexamined Patent Application, First Publication No. 2009-129889
[Patent Document 5]
Japanese Unexamined Patent Application, First Publication No. 2009-43703

[Summary of Invention]

[Technical Problem]

With an increase in application fields of lithium secondary batteries, there has been a requirement for further improvements in properties of a lithium secondary battery positive electrode.
The present invention was made in view of the aforementioned circumstances, and an object thereof is to provide a lithium secondary battery positive electrode with high rate properties and a small self-discharging amount and a lithium secondary battery that has the lithium secondary battery positive electrode.

[Solution to Problem]

That is, the present invention covers the following inventions [1] to [8].

[1] A lithium secondary battery positive electrode, wherein an electrode mixture layer that includes a positive electrode active material for a lithium secondary battery including secondary particles obtained by aggregating primary particles capable of being doped and de-doped with lithium ions, a conductive material, and a binding agent and a current collector are laminated, and requirements (1) and (2) below are satisfied:

(1) 180-degree peeling strength between the current collector and the electrode mixture layer is equal to or greater than 140 N/m; and
(2) a BET specific surface area of the electrode mixture layer is equal to or greater than 4.0 $m^2/g$ and equal to or less than 8.5 $m^2/g$.

[2] The lithium secondary battery positive electrode according to [1], wherein the positive electrode active material for a lithium secondary battery is represented by a composition formula (I) below:

$$Li[Li_x(Ni_{(1-y-z-w)}Co_yMn_zM_w)_{1-x}]O_2 \cdots \qquad (I)$$

(where M represents one or more elements selected from the group consisting of Fe, Cu, Ti, Mg, Al, W, B, Mo, Nb, Zn, Sn, Zr, Ga, and V, $0 \leq x \leq 0.2$, $0 < y \leq 0.4$, $0 \leq z \leq 0.4$, and $0 \leq w \leq 0.1$ are satisfied).

[3] The lithium secondary battery positive electrode according to [1] or [2], wherein an average secondary particle diameter of the positive electrode active material for a lithium secondary battery is equal to or greater than 3 μm and equal to or less than 15 μm.

[4] The lithium secondary battery positive electrode according to any one of [1] to [3], wherein the number of secondary particles with the positive electrode active material collapsing in the electrode mixture layer is equal to or greater than 5%.

[5] The lithium secondary battery positive electrode according to any one of [1] to [4], wherein the BET specific surface area of the positive electrode active material for a lithium secondary battery is equal to or greater than 0.5 $m^2/g$ and equal to or less than 1.5 $m^2/g$.

[6] The lithium secondary battery positive electrode according to any one of [1] to [5], wherein the positive electrode active material for a lithium secondary battery has a pore peak within a range of pore radii of equal to or greater than 10 nm and equal to or less than 200 nm in measurement of pore distribution obtained on the basis of a mercury intrusion method.

[7] The lithium secondary battery positive electrode according to any one of [1] to [6], wherein the binding agent includes fluorine-based resin.

[8] A lithium secondary battery including: the lithium secondary battery positive electrode according to any one of [1] to [7].

[Advantageous Effects of Invention]

According to the invention, it is possible to provide a lithium secondary battery positive electrode with high rate properties and a small self-discharging amount and a lithium secondary battery that has the lithium secondary battery positive electrode.

[Brief Description of Drawings]

Fig. 1A is an outline configuration diagram showing an example of a lithium ion secondary battery.
Fig. 1B is an outline configuration diagram showing an example of the lithium ion secondary battery
Fig. 2A is schematic diagram of a test piece and a test device used for a peeling strength test.
Fig. 2B is a schematic diagram of a test piece and a test device used for a peeling strength test.
Fig. 3 is a schematic diagram of a section of a positive electrode to which the invention is applied.
Fig. 4 is a schematic diagram of a section of a positive electrode to which the invention is not applied.
Fig. 5 is an SEM photo of a section of the positive electrode to which the invention is not applied.
Fig. 6 is an SEM photo of a section of the positive electrode to which the invention is applied.

[Description of Embodiments]

<Lithium secondary battery positive electrode>

According to an embodiment of the invention, there is provided a lithium secondary battery positive electrode, wherein an electrode mixture layer that includes a positive electrode active material for a lithium secondary battery including secondary particles obtained by aggregating primary particles capable of being doped and de-doped with lithium ions, a conductive material, and a binding agent and a current collector are laminated, and requirements (1) and (2) below are satisfied:

(1) 180-degree peeling strength between the current collector and the electrode mixture layer is equal to or greater than 140 N/m; and
(2) a BET specific surface area of the electrode mixture layer is equal to or greater than 4.0 $m^2/g$ and equal to or less than 8.5 $m^2/g$.

The lithium secondary battery positive electrode according to the embodiment has high peeling strength as represented by the aforementioned requirement (1). Further, the BET specific surface area of the electrode mixture layer falls within a specific range as represented by the aforementioned requirement (2). Therefore, the lithium secondary battery positive electrode according to the embodiment inhibits self-discharging and has excellent rate properties.

The self-discharging of the lithium secondary battery positive electrode is advanced by the positive electrode, an electrolyte solution, and an additive spontaneously causing a reaction. The present inventors came up with the idea that it is possible to inhibit the self-discharging by reducing a site at which the positive electrode material causes a reaction with the electrolyte solution or the like (hereinafter, also referred to as an "active site") and thus completed the invention.

The present inventors discovered that it was possible to inhibit self-discharging by focusing on a coating rate and a surface area of the positive electrode and controlling them to reduce the active site.

[Requirement (1)]

In the embodiment, 180-degree peeling strength between the current collector and the electrode mixture layer is equal to or greater than 140 N/m, is preferably equal to or greater than 150 N/m, is more preferably equal to or greater than 160 N/m, and is particularly preferably equal to or greater than 170 N/m.

The 180-degree peeling strength falling within the aforementioned range means that adhesive strength between particles in the electrode mixture is high. The high adhesive strength between the particles means a high coating rate due to a binding agent of the positive electrode active material, and the active site is expected to be reduced.

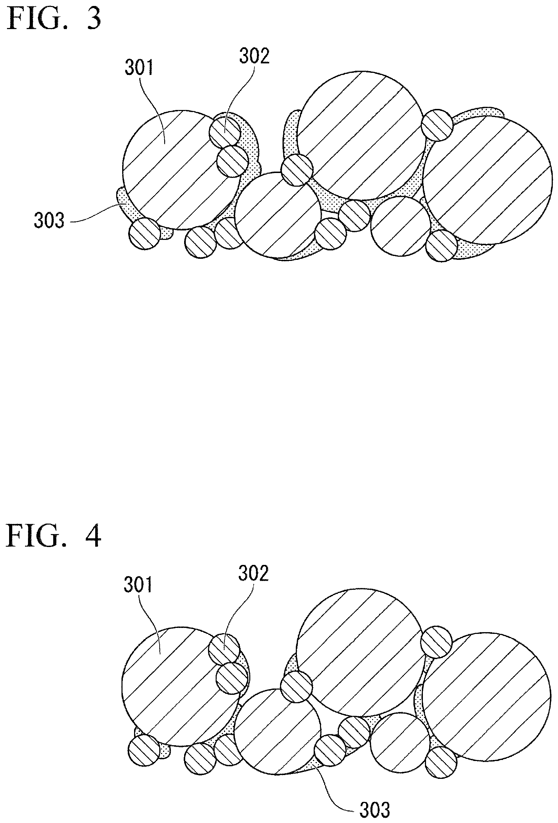

More specific description will be given with reference to Fig. 3. Fig. 3 is a schematic diagram of an electrode mixture layer configured of a positive electrode active material 301, a conductive material 302, and a binding agent 303. If the peeling strength is high, that is, if the adhesion strength between the particles in the electrode mixture is high, the coating rate of the positive electrode active material 301 due to the binding agent 303 increases.

In contrast, it is considered that if the coating rate due to the binding agent 303 is low, the strength between the particles also becomes low, and the active site of the positive electrode active material 301 also increases, as shown in Fig. 4.

In the embodiment, the peeling strength is measured by the following method.

<<Method of measuring peeling strength>>

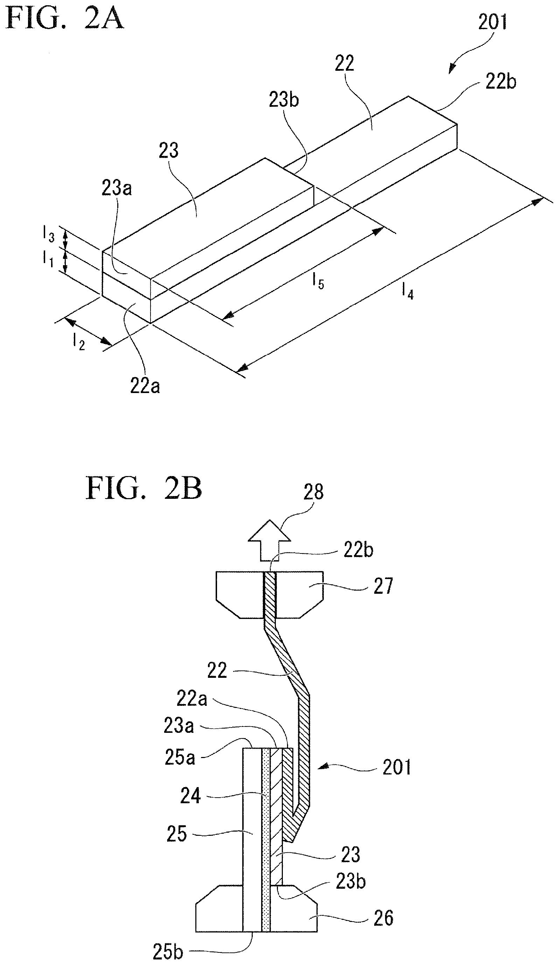

A method of measuring the peeling strength will be described with reference to Figs. 2A and 2B.

Fig. 2A shows a secondary battery electrode 201 configured of an electrode mixture layer 23 laminated on a current collector 22. The width $l_2$ of the current collector is 25 mm, and the length $l_4$ thereof is 100 mm. The thickness $l_1$ of the current collector is 20 $\mu$m, the thickness $l_3$ of the electrode mixture layer is about 35 mm, and the length $l_5$ thereof is 70 mm.

In the secondary battery electrode 201, a first end 22a of the current collector 22 and a first end 23a of the electrode mixture layer 23 are aligned. Meanwhile, a second end 22b of the current collector 22 is located at a position away from a second end 23b of the electrode mixture layer 23 in a plan view.

Fig. 2B shows a peeling strength measurement device.

The surface of the electrode mixture layer 23 and a substrate 25 (glass epoxy copper clad laminated plate MCL-E-67, manufactured by Hitachi Chemical Co., Ltd.) are secured with a double-sided adhesive tape 24 (Nicetac high-strength double-sided tape NW-K25, manufactured by Nichiban Co., Ltd.) with a width of 25 mm, thereby forming a test piece. At this time, a first end 25a of the substrate 25, the first end 22a of the current collector 22, and the first end 23a of the electrode mixture layer 23 are secured such that they are aligned.

The current collector is peeled off from the electrode mixture layer 23 from a first end of the electrode, the substrate is secured to a grip portion 26 below a vertical tensile strength tester (Autograph DSS-500, manufactured by Shimadzu Corporation), and the current collector 22 is secured to an upper grip portion 27.

The second end 22b of the current collector 22 is folded on the side opposite of the electrode mixture 23, and a part of the current collector 22 is peeled off from the electrode mixture layer 23. Thereafter, the second end 25b of the substrate 25 is secured to the lower grip portion 26, and the second end 22b of the current collector 22 is secured to the upper grip portion 27 for a test piece.

The current collector 22 is peeled off from the electrode mixture layer 23 from one end of the electrode, and the substrate is secured to the grip portion 26 below the vertical tensile strength tester (Autograph DSS-500, manufactured by Shimadzu Corporation).

An aluminum foil is added to the current collector 22, the second end 22b of the aluminum foil that serves as the current collector 22 is folded on the side opposite of the electrode mixture 23, and the second end 22b of the aluminum foil is secured to the upper grip portion 27.

Through a 180-degree peeling test of pulling the current collector 22 upward (the direction represented with the reference numeral 8 in Fig. 2B) at the tension speed of 100 mm/min, the tension strength (N) of the electrode mixture and the current collector of the secondary battery electrode is measured.

The peeling strength (N/m) of the electrode mixture and the current collector is calculated from the tension strength (N) and the electrode width (25 mm).

[Requirement (2)]

The BET specific surface area of the electrode mixture layer of the lithium secondary battery positive electrode according to the embodiment is equal to or greater than 4.0 $m^2/g$ and equal to or less than 8.5 $m^2/g$. The BET specific surface area is preferably equal to or greater than 4.1 $m^2/g$, is more preferably equal to or greater than 4.2 $m^2/g$, and is particularly preferably equal to or greater than 4.3 $m^2/g$.

Also, the BET specific surface area is preferably equal to or less than 8.4 $m^2/g$, is more preferably equal to or less than 8.3 $m^2/g$, and is particularly preferably equal to or less than 8.2 $m^2/g$.

The upper limit values and the lower limit values of preferable ranges described above can be arbitrarily combined.

For example, the BET specific surface area is preferably equal to or greater than 4.1 $m^2/g$ and equal to or less than 8.4 $m^2/g$, is more preferably equal to or greater than 4.2 $m^2/g$ and equal to or less than 8.3 $m^2/g$, and is further preferably equal to or greater than 4.3 $m^2/g$ and equal to or less than 8.2 $m^2/g$.

If the BET specific surface area of the electrode mixture falls within the aforementioned range, the amount of cracking in the particles of the positive electrode material occurring at the time of pressing of the electrode is expected to be small, for example. Also, generation of newly generated surfaces of the particles is expected to be inhibited. It is considered that the active site can be reduced for this reason.

A positive electrode using the positive electrode active material for a lithium secondary battery, which will be described later, as a positive electrode active material for a lithium secondary battery and a lithium secondary battery having the positive electrode will be described while describing a configuration of the lithium secondary battery.

In one example, the lithium secondary battery according to the embodiment has a positive electrode and a negative electrode, a separator interposed between the positive electrode and the negative electrode, and an electrolyte solution disposed between the positive electrode and the negative electrode.

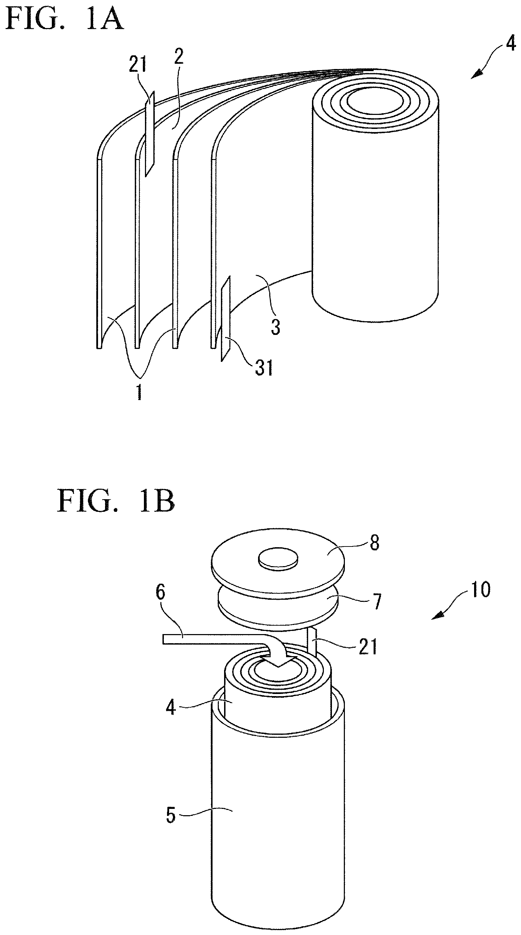

Fig. 1 is a schematic diagram showing an example of the lithium secondary battery according to the embodiment. A cylindrical lithium secondary battery 10 according to the embodiment is manufactured as follows.

First, as shown in Fig. 1A, a pair of separator 1 with a belt shape, a positive electrode 2 with a belt shape that has a positive electrode lead 21 at first end, and a negative electrode 3 with a belt shape that has a negative electrode lead 31 at first end are laminated in an order of the separator 1, the positive electrode 2, the separator 1, and the negative electrode 3 and are wound, thereby obtaining an electrode group 4.

Next, as shown in Fig. 1B, the electrode group 4 and an insulator, which is not shown in the drawing, are accommodated in a battery case 5, a case bottom is sealed, an electrolyte solution 6 is caused to be impregnated in the electrode group 4, and the electrolyte solution is disposed between the positive electrode 2 and the negative electrode 3. It is possible to manufacture the lithium secondary battery 10 by further sealing an upper portion of the battery case 5 with a top insulator 7 and a sealing body 8.

Examples of the shape of the electrode group 4 include columnar shapes with sectional shapes that are a circle, an oval, a rectangle, and a rectangle with rounded corners when the electrode group 4 is cut in the vertical direction with respect to an axis of the winding.

Also, as the shape of the lithium secondary battery that has such an electrode group 4, shapes defined by IEC60086 or JIS C 8500 that is a standard for a battery defined by International Electrotechnical Commission (IEC) can be employed. Examples thereof include shapes such as a cylindrical shape and a square shape.

Further, the lithium secondary battery is not limited to the aforementioned configuration of the winding type and may have a laminated configuration in which a laminated structure of the positive electrode, the separator, the negative electrode, and the separator is repeatedly overlaid. As the laminated lithium secondary battery, a so-called coin-type battery, a button-type battery, and a paper-type (or sheet-type) battery are exemplary examples.

Hereinafter, the respective configurations will be described in order.

(Positive electrode)

The positive electrode according to the embodiment can be manufactured by preparing a positive electrode mixture including a positive electrode active material for a lithium secondary battery, a conductive material, and a binding agent (hereinafter, also referred to as a binder) first and causing a positive electrode current collector to carry the positive electrode mixture, thereby forming a positive electrode mixture layer. In the specification, the "electrode mixture" is assumed to mean a "positive electrode mixture".

(Conductive material)

As the conductive material that the positive electrode according to the embodiment has, a carbon material can be used. As the carbon material, graphite powder, carbon black (acetylene black, for example), and a fiber-shaped carbon material are exemplary examples. Since carbon black is fine powders and has a large surface area, it is possible to increase conductivity inside the positive electrode and to improve charging and discharging efficiency and output properties by adding a small amount of carbon black to the positive electrode mixture while both bonding force between the positive electrode mixture and the positive electrode current collector due to a binder and bonding force inside the positive electrode mixture are degraded and internal resistance rather increases if an excessive amount of carbon black is added.

The proportion of the conductive material in the positive electrode mixture is preferably equal to or greater than 5 parts by mass and equal to or less than 20 parts by mass with respect to 100 parts by mass of positive electrode active material. In a case in which a fiber-shaped carbon material such as graphitized carbon fiber or carbon nanotube is used as the conductive material, it is also possible to reduce the proportion.

(Binding agent)

As the binding agent that the positive electrode according to the embodiment has, a thermoplastic resin can be used. Examples of the thermoplastic resin include a fluorine resin such as polyvinylidene fluoride (hereinafter, also referred to as PVdF), polytetrafluoroethylene (hereinafter, also referred to as PTFE), a tetrafluoroethylene/hexafluoropropylene/vinylidene fluoride-based copolymer, a hexafluoropropylene/vinylydene fluoride-based copolymer, and a tetrafluoroethylene/perfluorovinyl ether-based copolymer; and a polyolefin resin such as polyethylene and polypropylene.

Two or more kinds of these thermoplastic resin may be mixed and used. In the embodiment, the binding agent preferably includes fluorine-based resin, more preferably includes at least one kind selected from the group consisting of polyvinylidene fluoride, a polytetrafluoroethylene/hexafluoropropylene/vinylidene fluoride-based copolymer, and a hexafluoropropylene/vinylidene fluoride-based copolymer, a tetrafluoropropylene/vinylidene fluoride-based copolymer, and a tetrafluoroethylene/perfluorovinyether-based copolymer, and particularly preferably includes polyvinylidene fluoride.

As the amount of the fluorine resin, the proportion of the fluorine resin with respect to the entire positive electrode mixture is preferably equal to or greater than 1% by mass and equal to or less than 10% by mass. The proportion of the fluorine resin with respect to the entire positive electrode mixture is more preferably equal to or greater than 1.5% by mass and is particularly preferably equal to or greater than 2% by mass. Also, the proportion is more preferably equal to or less than 8% by mass and is particularly preferably equal to or less than 6% by mass.

If the amount of the fluorine-based resin falls within the aforementioned range, it is possible to obtain a positive electrode mixture that has both high adhesive force with the positive electrode current collector and high bonding force inside the positive electrode mixture.

In the embodiment, it is possible to control the peeling strength of the current collector and the electrode mixture represented by the aforementioned (1) within the aforementioned specific range by adjusting the content proportion of the binding agent.

(Positive electrode current collector)

As the positive electrode current collector that the positive electrode according to the embodiment has, a member with a long sheet shape that uses a metal material such as Al, Ni, or stainless steel as a formation material can be used. In particular, a member that uses Al as a formation material and that is worked into a long sheet shape is preferably used in terms of ease of working and low cost.

As a method of causing the positive electrode current collector to carry the positive electrode mixture, a method of compression-molding the positive electrode mixture on the positive electrode current collector is an exemplary example. Also, the positive electrode current collector may be caused to carry the positive electrode mixture by forming the positive electrode mixture into a paste using an organic solvent, applying the obtained positive electrode mixture paste to at least one surface side of the positive electrode current collector, drying, pressing, and fixing the paste, and further performing thermal treatment thereon as needed.

In the embodiment, it is possible to control the peeling strength of the current collector and the electrode mixture represented by the aforementioned requirement (1) within the aforementioned specific range by adjusting drying conditions of the electrode mixture paste applied to the positive current collector and thermal treatment conditions after the pressing.

Also, it is possible to control the BET specific surface area of the second particles of the positive electrode active material by adjusting pressing conditions.

(Drying conditions)

The drying temperature after the positive electrode mixture in the paste form is applied to the positive electrode current collector is preferably equal to or greater than 60°C, is more preferably equal to or greater than 70°C, and is further preferably equal to or greater than 80°C from the viewpoint that it is possible to increase the peeling strength of the positive electrode current collector and the electrode mixture. Also, from the viewpoint that it is possible to perform more uniform drying, the drying is preferably performed by air is blown.

(Pressing conditions)

It is possible to adjust the collapsing degree and the electrode density of the positive electrode active material by pressing the positive electrode dried under the aforementioned conditions with a pressing machine. The proportion of the number of secondary particles collapsing in the positive electrode active material in the electrode mixture is preferably equal to or greater than 5%. As the pressing machine, a single-axis press, a mold press, a roll press, and the like is an exemplary example. Here, rolling force is typically preferably equal to or greater than 50 kN/m and equal to or less than 2000 kN/m and is more preferably equal to or greater than 100 kN/m and equal to or less than 1000 kN/m. The thickness of the electrode is typically equal to or greater than about 10 μm and equal to or less than 100 μm. In the embodiment, the thickness of the electrode can be measured by a known film thickness measurement device.

(Thermal treatment conditions)

Thermal treatment is performed on the positive electrode pressed under the aforementioned conditions as needed. From the viewpoint that it is possible to increase the peeling strength, the thermal treatment temperature is preferably equal to or greater than 100°C, is more preferably equal to or greater than 120°C, and is further preferably equal to or greater than 140°C. Also, from the viewpoint that it is possible to obtain a positive electrode with low resistance, the thermal treatment temperature is preferably equal to or less than 200°C, is more preferably equal to or less than 180°C, and is further preferably equal to or less than 170°C. At the time of the thermal treatment, an inert gas atmosphere or a vacuum atmosphere is preferably used.

In a case in which the positive electrode mixture is formed into a paste, examples of the organic solvent that can be used include amine-based solvents such as N,N-dimethylaminopropylamine and diethylenetriamine; ether-based solvents such as tetrahydrofuran; ketone-based solvents such as methyl ethyl ketone; ester-based solvents such as methyl acetate; and amide-based solvents such as dimethylacetamide, N-methyl-2-pyrrolidone (hereinafter, also referred to as NMP).

As a method of coating the paste of the positive electrode mixture to the positive electrode current collector, a slit die application method, a screen application method, a curtain application method, a knife application method, a gravure application method, and an electrostatic spray method are exemplary examples.

It is possible to manufacture the positive electrode by the aforementioned method.

In the embodiment, the number of the secondary particles with the positive electrode active material collapsing in the electrode mixture layer is preferably equal to or greater than 5%. If the number of the secondary particles with the positive electrode active material collapsing is equal to or greater than 5%, a contact area between the positive electrode active material and the electrolyte solution, in which lithium ions can move, (hereinafter, also referred to as a "reaction site") increases, and it is thus possible to improve rate properties. If a large amount of collapsing secondary particles are included, the reaction site increases while the active site also increases, and self-discharging tends to advance. However, it is expected that the positive electrode with the BET specific surface area of the electrode mixture within the range that satisfies the aforementioned requirement (2) can inhibit self-discharging.

(Negative electrode)

It is only necessary for the negative electrode that the lithium secondary battery according to the embodiment has to be able to dope and de-dope lithium ions with a lower potential than that of the positive electrode, and an electrode obtained by a negative electrode mixture including a negative electrode active substance being carried by a negative electrode current collector and an electrode consisting only of the negative electrode active substance is an exemplary example.

(Negative electrode active substance)

As the negative electrode active substance that the negative electrode has, a carbon material, a chalcogen compound (such as an oxide, sulfide, or the like), a nitride, a metal, or an alloy, which are materials that can dope and de-dope lithium ions with a lower potential than that of the positive electrode, are exemplary examples.

Examples of the carbon materials that can be used as the negative electrode active substance includes graphite such as natural graphite and artificial graphite, cokes, carbon black, thermally decomposed carbons, carbon fiber, and organic polymer compound burned substance.

Examples of the oxide that can be used as the negative electrode active substance includes oxides of silicon represented by a formula $SiO_x$ (here, x is a positive actual number) such as $SiO_2$ and SiO; oxides of titanium represented by a formula TiOx (here, x is a positive actual number) such as $TiO_2$ and TiO; oxides of vanadium represented by a formula $VO_x$ (here, x is a positive actual number) such as $V_2O_5$ and $VO_2$; oxides of iron represented by a formula $FeO_x$ (here, x is a positive actual number) such as $Fe_3O_4$, $Fe_2O_3$, and FeO; oxides of tin represented by a formula $SnO_x$ (here, x is a positive actual number) such as $SnO_2$ and SnO; oxides of tungsten represented by a general formula $WO_x$ (here, x is a positive actual number) such as $WO_3$ and $WO_2$; and composite metal oxides that contain lithium, titanium, or vanadium such as $Li_4Ti_5O_{12}$ and $LiVO_2$.

Examples of the sulfide that can be used as the negative electrode active substance includes: sulfides of titanium represented by a formula $TiS_x$ (here, x is a positive actual number) such as $Ti_2S_3$, $TiS_2$ and TiS; sulfides of vanadium represented by a formula $VS_x$ (here, x is a positive actual number) such as $V_3S_4$, $VS_2$, and VS; sulfides of iron represented by a formula $FeS_x$ (here, x is a positive actual number) such as $Fe_3S_4$, $FeS_2$, and FeS; sulfides of molybdenum represented by a formula $MoS_x$ (here, x is a positive actual number) such as $Mo_2S_3$ and $MoS_2$; sulfides of tin represented by a formula $SnS_x$ (here, x is a positive actual number) such as $SnS_2$ and SnS; sulfides of tungsten represented by a formula $WS_x$ (here, x is a positive actual number) such as $WS_2$; sulfides of antimony represented by a formula $SbS_x$ (here, x is a positive actual number) such as $Sb_2S_3$; and sulfides of selenium represented by a formula $SeS_x$ (here, x is a positive actual number) such as $Se_5S_3$, $SeS_2$, and SeS.

Examples of the nitride that can be used as the negative electrode active substance include lithium-containing nitrides such as $Li_3N$ and $Li_{3-x}A_xN$ (here, A is any one of or both Ni and Co, and $0 < x < 3$ is satisfied).

One kind of these carbon materials, oxides, sulfides, and nitrides may be used alone, or two or more kinds thereof may be used in combination. Also, the carbon materials, oxides, sulfides, and nitrides may be either crystalline substances or amorphous substances.

Also, examples of the metal that can be used as the negative electrode active substance include lithium metal, silicon metal, and tin metal.

Examples that can be used as the negative electrode active substance also includes lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$.

These metals and alloys are worked into a foil form, for example, and are mainly used alone as an electrode.

Among the aforementioned negative electrode active substances, carbon materials that contains graphite as a main constituent, such as natural graphite and artificial graphite are preferably used for the reasons that there is substantially no change in the potential of the negative electrode from an uncharged state to a fully charged state at the time of charging (satisfactory potential flatness), an average discharging potential is low, a capacitance maintaining rate at the time of causing charging and discharging to repeatedly happen (satisfactory cycle properties). For example, the shape of the carbon material may be any of a thin piece shape such as natural graphite, a spherical shape such as a meso-carbon microbead, a fiber shape such as graphitized carbon fiber, aggregates of fine powder, and the like.

The aforementioned negative electrode mixture may contain a binder as needed. Examples of the binder include a thermoplastic resin, and specific examples thereof include PVdF, thermoplastic polyimide, carboxymethyl cellulose, polyethylene, and polypropylene.

(Negative electrode current collector)

Examples of the negative electrode current collector that the negative electrode has includes a belt-shaped member that uses, as a formation material, a metal material such as Cu, Ni, or stainless steel. In particular, a negative electrode current collector that uses Cu as a formation material and that is worked into a long sheet shape is preferably used in terms of difficult in creation of an alloy with lithium and ease of working.

Examples of a method of causing such a negative electrode current collector to carry the negative electrode mixture includes a method using compression molding and a method of forming a paste using a solvent or the like, applying the paste to the negative electrode current collector, and drying, pressing, and pressure-bonding the negative electrode mixture.

(Separator)

As the separator that the lithium secondary battery according to the embodiment has, a material that is made of a material a polyolefin resin such as polyethylene or polypropylene, a fluorine resin, or a nitrogen-containing aromatic polymer and that has form of a porous film, a non-woven cloth, a woven cloth, or the like. Also, two or more kinds of these materials may be used to form the separator, or these materials may be laminated to form a separator.

In the embodiment, permeability resistance based on the Gurley method defined by JIS P 8117 is preferably equal to or greater than 50 seconds/100 cc and equal to or less than 300 seconds/100 cc, and is more preferably equal to or greater than 50 seconds/100 cc and equal to or less than 200 seconds/100 cc in order for the separator to cause the electrolyte to satisfactorily permeate therethrough when the battery is used (at the time of charging and discharging).

Also, the porosity of the separator is preferably equal to or greater than 30% by volume and equal to or less than 80% by volume, and is more preferably equal to or greater than 40% by volume and equal to or less than 70% by volume. The separator may be obtained by laminating separators with different porosities.

(Electrolyte solution)

The electrolyte solution that the lithium secondary battery according to the embodiment has contains an electrolyte and an organic solvent.

Examples of the electrolyte included in the electrolyte solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (Here, BOB represents bis(oxalato)borate), LiFSI (Here, FSI represents bis(fluorosulfonyl)imide), a lower aliphatic carboxylic acid lithium salt, and $LiAlCl_4$, and a mixture of two or more kinds thereof may be used. In particular, it is preferable to use an electrolyte that includes at least one kind selected from the group consisting of LiPF6, $LiAsF_6$, $LiSbF_6$, $LiBF_4$, $LiCF_3SO_3$, $LiN(SO_2CF_3)_2$, and $LiC(SO_2CF_3)_3$ that includes fluorine.

Also, as the organic solvent included in the electrolyte solution, it is possible to use: carbonates such as propylene carbonate, ethylene carbonate, dimethyl carbonate, diethyl carbonate, ethyl methyl carbonate, 4-trifluoromethyl-1,3-dioxolane-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluorometh y ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; and carbamates such as 3-methyl-2-oxazolidone; sulfur-containing compounds such as sulfolane, dimethyl sulfoxide and 1,3-propanesultone, or substances obtained by further introducing a fluoro group into these organic solvents (substances obtained by replacing one or more hydrogen atoms that the organic solvent has are substituted with fluorine atoms).

As the organic solvent, two or more kinds thereof are preferably mixed and used. In particular, a mixture solvent including carbonates is preferably used, and a mixture solvent of a cyclic carbonate and a non-cyclic carbonate and a mixture solvent of a cyclic carbonate and ethers are further preferably used. As the mixture solvent of the cyclic carbonate and the non-cyclic carbonate, a mixture solvent that includes an ethylene carbonate, a dimethyl carbonate, and an ethyl methyl carbonate is preferably used. The electrolyte solution using such a mixture solvent have a lot of advantages that an operation temperature range is wide, degradation hardly occurs even if charging and discharging are performed at a high current rate, degradation hardly occurs even after utilization for a long period of time, and the electrolyte solution is persistent even in a case in which a graphite material such as natural graphite or artificial graphite is used as the negative electrode active material.

Also, as the electrolyte solution, it is preferable to use a lithium salt that includes fluorine such as LiPF6 and an organic solvent that has a fluorine substituent group since safety of the obtained lithium secondary battery is enhanced. A mixture solvent that includes ethers that has a fluorine substituent group such as pentafluoropropyl methyl ether or 2,2,3,3-tetrafluoropropyl difluoromethyl ether and dimethyl carbonate is further preferably used due to a high capacitance maintaining rate even at the time of charging and discharging at a high current rate.

A solid electrolyte may be used instead of the aforementioned electrolyte solution. As the solid electrolyte, it is possible to use an organic polymer electrolyte such as a polyethylene oxide-based polymer compound and a copolymer compound that includes at least one or more kinds of a polyorganosiloxane chain and a polyoxyalkylene chain. In addition, it is possible to use a so-called gel obtained by causing a polymer compound to hold a nonaqueous electrolyte solution. Also, inorganic solid electrolytes including sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ are exemplary examples, and a mixture of two or more kinds thereof may be used. By using these solid electrolytes, it is possible to further enhance the safety of the lithium secondary battery.

Also, in a case in which a solid electrolyte is used in the lithium secondary battery according to the embodiment, the solid electrolyte may serve as a separator, and in such a case, it may not be necessary to prepare the separator.

Since the positive electrode active material with the aforementioned configuration uses the aforementioned lithium-containing composite metal oxide according to the embodiment, it is possible to extend the lifetime of the lithium secondary battery using the positive electrode active material.

Also, since the positive electrode with the aforementioned configuration has the aforementioned positive electrode active material for a lithium secondary battery according to the embodiment, it is possible to extend the lifetime of the lithium secondary battery.

Further, since the lithium secondary battery with the aforementioned configuration has the aforementioned positive electrode, a lithium secondary battery with a longer lifetime than that in the related art is achieved.

«Positive electrode active material for lithium secondary battery»

The positive electrode active material for a lithium secondary battery that is used in the embodiment includes secondary particles obtained by aggregating primary particles capable of being doped and de-doped with lithium ions.

The primary particles are a minimum unit that is observed as independent particles through SEM, and the aforementioned particles are single crystal or polycrystal in which crystallites gather. The secondary particles are particles formed by the primary particles gathering and can be observed through SEM observation or by a laser diffraction scattering method, which will be described later.

The positive electrode active material for a lithium secondary battery used in the embodiment is preferably represented by the following formula (I):

$$Li[Li_x(Ni_{(1-y-z-w)}Co_yMn_zM_w)_{1-x}]O_2 \cdots \quad (I)$$

(where M represents one or more elements selected from the group consisting of Fe, Cu, Ti, Mg, Al, W, B, Mo, Nb, Zn, Sn, Zr, Ga, and V, $0 \leq x \leq 0.2$, $0 < y \leq 0.4$, $0 \leq z \leq 0.4$, and $0 \leq w \leq 0.1$ are satisfied).

From the viewpoint that it is possible to obtain a lithium secondary battery with high cycle properties, x in the aforementioned composition formula (I) is preferably greater than 0, is more preferably equal to or greater than 0.01, and is further preferably equal to or greater than 0.02. Also, from the viewpoint that it is possible to obtain a lithium secondary battery with higher initial coulombic efficiency, x in the aforementioned composition formula (I) is preferably equal to or less than 0.1, is more preferably equal to or less than 0.08, and is further preferably equal to or less than 0.06.

The upper limit values and the lower limit values of x can be arbitrarily combined.

For example, x is preferably greater than 0 and equal to or less than 0.1, is more preferably equal to or greater than 0.01 and equal to or less than 0.08, and is further preferably equal to or greater than 0.02 and equal to or less than 0.06.

In the specification, "high cycle properties" mean that the charging capacitance maintaining rate is high.

Also, from the viewpoint that it is possible to obtain a lithium secondary battery with low battery resistance, y in the aforementioned composition formula (I) is preferably equal to or greater than 0.005, is more preferably equal to or greater than 0.01, and is further preferably equal to or greater than 0.05. Also, from the viewpoint that it is possible to obtain a lithium secondary battery with high thermal stability, y in the aforementioned composition formula (I) is preferably equal to or less than 0.37, is more preferably equal to or less than 0.35, and is further preferably equal to or less than 0.33.

The upper limit values and the lower limit values of y can be arbitrarily combined.

For example, y is preferably equal to or greater than 0.005 and equal to or less than 0.37, is more preferably equal to or greater than 0.01 and equal to or less than 0.35, and is further preferably equal to or greater than 0.05 and equal to or less than 0.33.

Also, from the viewpoint that it is possible to obtain a lithium secondary battery with high cycle properties, z in the aforementioned composition formula (I) is preferably equal to or greater than 0.01, is more preferably equal to or greater than 0.03, and is further preferably equal to or greater than 0.1. In addition, from the viewpoint that it is possible to obtain a lithium secondary battery with high preservation properties at a high temperature (in an environment of 60 °C, for example), z in the aforementioned composition formula (I) is preferably equal to or less than 0.4, is more preferably equal to or less than 0.38, and is further preferably equal to or less than 0.35.

The upper limit values and the lower limit values of z can be arbitrarily combined.

For example, z is preferably equal to or greater than 0.01 and equal to or less than 0.4, is more preferably equal to or greater than 0.03 and equal to or less than 0.38, and is further preferably equal to or greater than 0.1 and equal to or less than 0.35.

Also, from the viewpoint that it is possible to obtain a lithium secondary battery with low battery resistance, w in the aforementioned composition formula (I) is preferably greater than 0, is more preferably equal to or greater than 0.0005, and is further preferably equal to or greater than 0.001. Also, from the viewpoint that it is possible to obtain a lithium secondary battery with high discharging capacitance at a high current rate, w in the aforementioned composition formula (I) is preferably equal to or less than 0.09, is more preferably equal to or less than 0.08, and is further preferably equal to or less than 0.07.

The upper limit values and the lower limit values of w can be arbitrarily combined.

For example, w is preferably greater than 0 and equal to or less than 0.09, is more preferably equal to or greater than 0.0005 and equal to or less than 0.08, and is further preferably equal to or greater than 0.001 and equal to or less than 0.07.

M in the aforementioned composition formula (I) represents one or more elements selected from the group consisting of Fe, Cu, Ti, Mg, Al, W, B, Mo, Nb, Zn, Sn, Zr, Ga, and V.

Also, from the viewpoint that it is possible to obtain a lithium secondary battery with high cycle properties, M in the composition formula (I) is preferably at least one kind selected from the group consisting of Ti, Mg, Al, W, B, and Zr, and from the viewpoint that it is possible to obtain a lithium secondary battery with high thermal stability, M is preferably at least one kind selected from the group consisting of Al, W, B, and Zr.

(Average secondary particle diameter)

In the embodiment, the average secondary particle diameter of the lithium metal composite oxide powder is preferably equal to or greater than 3 μm, is more preferably equal to or greater than 4 μm, and is further preferably equal to or greater than 5 μm from the viewpoint that handling properties of the positive electrode active material for lithium secondary batteries are enhanced. Also, from the viewpoint that it is possible to obtain a lithium secondary battery with high discharging capacitance at a high current rate, the average secondary particle diameter is preferably equal to or less than 15 μm, is more preferably equal to or less than 13 μm, and is further preferably equal to or less than $I_2$ μm.

The upper limit values and the lower limit values of the average secondary particle diameter can be arbitrarily combined.

For example, the average secondary particle diameter is preferably equal to or greater than 3 μm and equal to or less than 15 μm, is more preferably equal to or greater than 4 μm and equal to or less than 13 μm, and is further preferably equal to or greater than 5 μm and equal to or less than $I_2$ μm.

In the embodiment, the "average secondary particle diameter" of the lithium metal composite oxide powder represents a value measured by the following method (laser diffraction scattering method).

0.1 g of a positive electrode active material powder for a lithium secondary battery is poured into 50 ml of aqueous solution of 0.2% by mass of sodium hexametaphosphate, thereby obtaining a dispersion with the powder dispersed therein. Granularity distribution of the obtained dispersion is measured using a laser diffraction granularity distribution analyzer (manufactured by Horiba Ltd., model No. LA-950), and a volume-based cumulative particle size distribution curve is obtained. In the obtained cumulative granularity distribution curve, the particle size (D50) when seen from the side of the fine particles at the time of 50% accumulation is regarded as the average secondary particle diameter of the lithium metal composite oxide powder.

(BET specific surface area)

In the embodiment, the BET specific surface area of the positive electrode active material for a lithium secondary battery is preferably equal to or greater than 0.5 $m^2$/g and equal to or less than 1.5 $m^2$/g. More specifically, the aforementioned BET specific surface area is preferably equal to or greater than 0.55 $m^2$/g, is more preferably equal to or greater than 0.6 $m^2$/g, and is particularly preferably equal to or greater than 0.65 $m^2$/g.

Also, the aforementioned BET specific surface area is preferably equal to or less than 1.4 $m^2$/g, is more preferably equal to or less than 1.3 $m^2$/g, and is particularly preferably equal to or less than 1.1 $m^2$/g.

The aforementioned upper limit values and lower limit values can be arbitrarily combined.

For example, the BET specific surface area is preferably equal to or greater than 0.55 $m^2$/g and equal to or less than 1.4 $m^2$/g, is more preferably equal to or greater than 0.6 $m^2$/g and equal to or less than 1.3 $m^2$/g, and is particularly preferably equal to or greater than 0.65 $m^2$/g and equal to or less than 1.1 $m^2$/g.

(Pore radii)

In the measurement of the pore distribution obtained by the mercury intrusion method, the pore radii preferably have a pore peak within a range of equal to or greater than 10 nm and equal to or less than 200 nm. More specifically, the pore radius of the pore peak is preferably equal to or greater than 20 nm, is more preferably equal to or greater than 30 nm, and is particularly preferably equal to or greater than 40 nm. Also, the pore radius of the pore peak is more preferably equal to or less than 180 nm, is more preferably equal to or less than 150 nm, and is particularly preferably equal to or less than 120 nm.

The aforementioned upper limit values and lower limit values can be arbitrarily combined.

For example, the pore radius of the pore peak is more preferably equal to or greater than 20 nm and equal to or less than 180 nm, is further preferably equal to or greater than 30 nm and equal to or less than 150 nm, and is particularly preferably equal to or greater than 40 nm and equal to or less than 120 nm.

In the embodiment, "pore peak" means a peak with the highest strength within the aforementioned specific range.

«Measurement of pore distribution based on mercury intrusion method»

In the embodiment, measurement of pore distribution based on the mercury intrusion method is performed by the following method.

First, a container with the positive electrode active material prepared therein is exhausted into a vacuum, and the container is then filled with mercury. Although mercury has high surface tension, and mercury does not enter pores on the surface of the positive electrode active material under normal circumstances, the mercury gradually enters the pores in order from pores with larger diameters to pores with smaller diameters if a pressure is applied to mercury and is gradually raised. If the amount of mercury injected into the pores is detected while the pressure is caused to successively increase, a mercury injection curve is obtained from a relationship between the pressure applied to the mercury and the amount of injected mercury.

Here, on the assumption that the shape of the pores is a cylindrical shape, the pressure applied to the mercury is P, the pore size (pore diameter) is D, the mercury surface tension is $\sigma$, and a contact angle between the mercury and the sample is $\theta$, the pore size is represented by the following Formula (A).

$$D = -4\sigma \times \cos\theta / P \ldots (A)$$

That is, since there is a correlation between the pressure P applied to the mercury and the diameter D of the pores that the mercury enters, it is possible to obtain a pore distribution curve representing how large the pore radius is and the volume of the positive electrode active material on the basis of the obtained mercury injection curve. Note that, as approximate measurement limits of the pore diameters based on the mercury intrusion method, the lower limit is equal to or greater than about 2 nm, and the upper limit is equal to or less than about 200 $\mu$m. The measurement based on the mercury intrusion method can be performed using a device such as a mercury porosimeter. As specific examples of the mercury porosimeter, an Autopore III9420 (manufactured by Micromeritics) and the like are exemplary examples.

(Layered structure)

A crystal structure of the positive electrode active material for a lithium secondary battery is a layered structure and is more preferably a hexagonal crystal structure or a monoclinic crystal structure.

The hexagonal crystal structure is attributable to any one of space groups selected from the group consisting of P3, $P3_1$, $P3_2$, R3, P-3, R-4, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3/m$, P622, $P6_122$, $P6_522$, $P6_222$, $P6_422$, $P6_322$, P6mm, P6cc, $P6_3cm$, $P6_3mc$, P-6m2, P-6c2, P-62m, P62c, P6/mmm, P6/mcc, $P6_3/mcm$, and $P6_3/mmc$.

Also, the monoclinic crystal structure is attributable to any one of space groups selected from the group consisting of P2, $P2_1$, C2, Pm, Pc, Cm, Cc, P2/m, $P2_1/m$, C2/m, P2/c, $P2_1/c$, and C2/c.

Among them, the crystal structure is particularly preferably a hexagonal crystal structure that is attributable to the space group R-3m or a monoclinic crystal structure that is attributable to C2/m from the viewpoint that it is possible to obtain a lithium secondary battery with high discharging capacitance.

As the lithium compound used in the embodiment, any one of lithium carbonate, lithium nitrate, lithium sulfate, lithium acetate, lithium hydroxide, lithium oxide, lithium chloride, and lithium fluoride can be used, or two or more compounds can be mixed and used. Among them, any one or both of lithium hydroxide and lithium carbonate are preferably used.

From the viewpoint that handling properties of the positive electrode active material for lithium secondary batteries are enhanced, a lithium carbonate constituent included in the positive electrode active material powder for a lithium secondary battery is preferably equal to or less than 0.4% by mass, is more preferably equal to or less than 0.39% by mass, and is particularly preferably equal to or less than 0.38% by mass.

Also, from the viewpoint that handling properties of the positive electrode active material for lithium secondary batteries are enhanced, a lithium hydroxide constituent included in the positive electrode active material powder for a lithium secondary battery is preferably equal to or less than 0.35% by mass, is more preferably equal to or less than 0.25% by mass, and is particularly preferably equal to or less than 0.2% by mass.

[Method of manufacturing positive electrode active material for lithium secondary batteries]

For manufacturing the positive electrode active material for lithium secondary batteries according to the embodiment (hereinafter, also referred to as a "lithium metal composite oxide"), it is preferable that a metal composite compound including a metal other than lithium, that is, an essential metal configured of Ni, Co, and Mn, and one or more arbitrary elements selected from Fe, Cu, Ti, Mg, Al, W, B, Mo, Nb, Zn, Sn, Zr, Ga, and V be first prepared and that the metal composite compound be burned with an appropriate lithium salt. As the metal composite compound, a metal composite hydroxide or a metal composite oxide is preferably used.

Hereinafter, an example of a method of manufacturing the positive electrode active material will be described separately for a process of manufacturing a metal composite compound and a process of manufacturing a lithium metal composite oxide.

(Process of manufacturing metal composite compound)

The metal composite compound can typically be manufactured by a known batch coprecipitation method or a successive coprecipitation method. Hereinafter, a method of manufacturing a metal composite oxide including nickel, cobalt, and manganese as metals will be described in detail as an example.

First, a nickel salt solution, a cobalt salt solution, a manganese salt solution, and a complexing agent are caused to react by the successive method disclosed in Japanese Unexamined Patent Application, First Publication No. 2002-201028, in particular, thereby manufacturing a composite metal hydroxide represented as $Ni_aC_{ob}Mn_c(OH)_2$ (where a + b + c = 1).

Although a nickel salt that is a solute of the aforementioned nickel salt solution is not particularly limited, any of nickel sulfate, nickel nitride, nickel chloride, and nickel acetate can be used, for example. As a cobalt salt that is a solute of the aforementioned cobalt salt solution, any of cobalt sulfate, cobalt nitrate, and cobalt chloride can be used, for example. As a manganese salt that is a solute of the aforementioned manganese salt solution, any of manganese sulfate, manganese nitrate, and manganese chloride can be used, for example. The aforementioned metal salts are used at proportions corresponding to the composition ratio of $Ni_aCo_bMn_c(OH)_2$ as described above. Also, water is used as a solvent.

As the complexing agent, a complexing agent that can form a complex with ions of nickel, cobalt, and manganese in an aqueous solution can be used, and examples thereof include ammonium ion donors (such as ammonium sulfate, ammonium chloride, ammonium carbonate, and ammonium fluoride), hydrazine, ethylenediaminetetraacetic acid, nitrilotriacetic acid, uracildiacetic acid, and glycine.

At the time of precipitation, an alkali metal hydroxide (for example, sodium hydroxide or potassium hydroxide) is added as needed in order to adjust the pH value of the aqueous solution.

If the aforementioned nickel salt solution, the cobalt salt solution, the manganese salt solution, and the complexing agent are caused to be successively supplied to the reaction tank, and nickel, cobalt, and manganese react, thereby manufacturing $Ni_aCo_bMn_c(OH)_2$. At the time of the reaction, the temperature in the reaction tank is controlled within a range of equal to or greater than 20 °C and equal to or less than 80 °C, preferably within a range of equal to or greater than 30 °C and equal to or less than 70 °C, for example, the pH value (at 40 °C) in the reaction tank is controlled within a range of equal to or greater than pH 9 and equal to or less than pH 13, preferably within a range of equal to or greater than pH 11 and equal to or less than pH 13, for example, and the substances in the reaction tank are appropriately stirred. The reaction tank is of a type that causes the formed reaction precipitate to overflow for separation.

By appropriately controlling the concentration of the metal salts to be supplied to the reaction tank, the stirring speed, the reaction temperature, the reaction pH, and burning conditions and the like, which will be described later, it is possible to control various physical properties such as an average secondary particle diameter, the BET specific surface area, and the pore radii of the lithium metal composite oxide that is finally obtained in the following process. In particular, in order to realize the desired collapsing degree, the pore radii, and the secondary particle diameter, bubbling with various kinds of gases, such as inert gases such as nitrogen, argon, or carbon dioxide, oxidation gases such as air or oxygen, or mixture gases thereof, for example, may be used in combination with the aforementioned control of conditions.

As substances that promote an oxidized state in addition to the gas, it is possible to use a peroxide such as hydrogen peroxide, peroxide salts such as permanganate, perchlorate, hypochlorite, nitric acid, a halogen, ozone, or the like. As substances that promote a reduced state in addition to the gas, it is possible to use organic acids such as oxalic acid and formic acid, a subsulfate, hydrazine, or the like.

If the reaction pH in the reaction tank is raised, for example, the primary particle diameter of the metal composite compound decreases, and a metal composite compound with a high BET specific surface area tends to be obtained. Meanwhile, if the reaction pH is reduced, a metal composite compound with a low BET specific surface area tends to be obtained. Also, if the oxidized state in the reaction tank is raised, a metal composite oxide with many gaps tends to be obtained. Meanwhile, if the oxidized state is reduced, a fine metal oxide tends to be obtained. Finally, the respective conditions of the reaction pH and the oxidized state are precisely controlled such that the metal composite compound finally has desired physical properties, and it is possible to control pore sizes in the gaps of the metal composite compound by causing an oxidation gas to be successively ventilated in the reaction tank while an inert gas such as nitrogen gas is caused to be ventilated. In a case in which air is used as the oxidation gas, a ratio A/B of the air flow rate A (L/min) and the volume B (L) of the reaction tank is preferably greater than 0 and less than 0.020.

The BET specific surface area of the lithium metal composite oxide powder and the collapsing degree of the secondary particles used in the embodiment can be caused to fall within the specific range used in the embodiment by controlling burning conditions and the like, which will be described later, using the aforementioned metal composite compound.

Since the reaction conditions also depend on the size and the like of the reaction tank used, it is only necessary to optimize the reaction conditions while monitoring various physical properties of the finally obtained lithium composite oxide.

After the aforementioned reaction, the obtained reaction precipitate is washed with water and is dried, thereby isolating a nickel, cobalt, manganese hydroxide as a nickel, cobalt, manganese composite compound. Also, the reaction precipitate may be washed with a weak acid water or an alkali solution including sodium hydroxide or potassium hydroxide as needed.

Note that although the nickel, cobalt, manganese composite hydroxide is manufactured in the aforementioned example, a nickel, cobalt, manganese composite oxide may be prepared.

(Process of manufacturing lithium metal composite oxide)

The aforementioned metal composite oxide or hydroxide is dried and then mixed with a lithium salt. Although drying conditions are not particularly limited, any of conditions under which the metal composite oxide or hydroxide is neither oxidized nor reduced (specifically, conditions under which the oxide is maintained as the oxide or conditions under which the hydroxide is maintained as hydroxide), conditions under which the metal composite hydroxide is oxidized (specifically, drying conditions under which the hydroxide is oxidized into an oxide), and conditions under which the metal composite oxide is reduced (specifically, drying conditions under which the oxide is reduced into a hydroxide) may be used. For the conditions under which the metal composite oxide or hydroxide is neither oxidized nor reduced, it is only necessary to use inert gas such as rare gas such as nitrogen, helium, or argon, and for the conditions under which the hydroxide is oxidized, oxidation may be performed in an atmosphere of oxygen or air. Also, for the conditions under which the metal composite oxide is reduced, a reducing agent such as hydrazine or sodium sulfite may be used in an atmosphere of inert gas. As the lithium salt, any one of lithium carbonate, lithium nitrate, lithium acetate, lithium hydroxide, lithium hydroxide hydrate, and lithium oxide may be used, or two or more thereof may be mixed and used.

After the metal composite oxide or hydroxide is dried, the metal composite oxide or hydroxide may be appropriately classified. The aforementioned lithium salt and the metal composite metal hydroxide are used in consideration of a composition ratio of a final target product. In a case in which a nickel, cobalt, manganese composite hydroxide is used, for example, the lithium salt and the aforementioned composite metal hydroxide are used at proportions corresponding to a composition ratio of $Li[Li_d(Ni_aCo_bMn_c)_{1-d}]O_2$. A mixture of the nickel, cobalt, manganese composite metal hydroxide and the lithium salt is burned, thereby obtaining a lithium-nickel, cobalt, manganese composite oxide. Note that, drying air, an oxygen atmosphere, an inert atmosphere, or the like is used in accordance with a desired composition, and a plurality of heating processes are performed as needed.

The burning temperature of the aforementioned metal composite oxide or hydroxide and the lithium compound such as lithium hydroxide or lithium carbonate is not particularly limited. The burning temperature is preferably equal to or greater than 600°C and equal to or less than 1100°C, is more preferably equal to or greater than 750°C and equal to or less than 1050°C, and is further preferably equal to or greater than 800°C and equal to or less than 1025°C in the embodiment.

If the burning temperature falls within the aforementioned temperature range, a preferable range for using the BET specific surface area of the lithium metal composite oxide and the collapsing degree of the secondary particles in the embodiment can be achieved.

The burning time is preferably equal to or greater than 3 hours and equal to or less than 50 hours. If the burning time exceeds 50 hours, no problem occurs in terms of battery performances while the battery performances substantially tend to be degraded due to volatilization of lithium. If the burning time is less than 3 hours, crystal tends to be poorly developed, and the battery performances tend to be degraded. Note that it is also effective to perform temporal burning before the aforementioned burning. The temperature of the temporal burning is preferably within a range of equal to or greater than 300°C and equal to or less than 850°C, and the burning is preferably performed for a time of equal to or greater than 1 hour and equal to or less than 10 hours.

In the embodiment, the burning time means a total time until maintaining of the temperature ends after the burning temperature is reached. In a case in which the temporal burning is performed, the burning time means a total time until the maintaining of the temperatures ends after the burning temperatures in the respective burning processes are reached.

The lithium metal composite oxide obtained by the burning is appropriately classified after pulverization, thereby obtaining a positive electrode active material that can be applied to lithium secondary batteries.

[Examples]

Next, the invention will be described in further detail with reference to examples.

In the examples, evaluation of the positive electrode active material for a lithium secondary battery and creation evaluation of the positive electrode for a lithium secondary battery and the lithium secondary battery were conducted as follows.

<Measurement of peeling strength>

A method of measuring the peeling strength will be described with reference to Figs. 2A and 2B.

Fig. 2A shows a secondary battery electrode 201 configured from an electrode mixture layer 23 laminated on the current collector 22. The width $l_2$ of the current collector was 25 mm, and the length $l_4$ was 100 mm. The thickness $l_1$ of the current collector was 20 μm, the thickness $l_3$ of the electrode mixture layer was about 35 μm, and the length $l_5$ was 70 mm.

In the secondary battery electrode 201, first end 22a of the current collector 22 is aligned with first end 23a of the electrode mixture layer 23. Meanwhile, the second end 22b of the current collector 22 is located at a position away from the second end 23b of the electrode mixture layer 23 in a plan view.

Fig. 2B shows a peeling strength measurement device.

The surface of the electrode mixture layer 23 and a substrate 25 (glass epoxy copper clad laminated plate MCL-E-67, manufactured by Hitachi Chemical Co., Ltd.) were secured with a double-sided adhesive tape 24 (Nicetac high-strength double-sided tape NW-K25, manufactured by Nichiban Co., Ltd.) with a width of 25 mm, thereby forming a test piece. At this time, a first end 25a of the substrate 25, the first end 22a of the current collector 22, and the first end 23a of the electrode mixture layer 23 were secured such that they are aligned.

The current collector 22 was peeled from the electrode mixture layer 23 from one end of the electrode, and the substrate was secured to a grip portion 26 below a vertical tensile strength tester (Autograph DSS-500, manufactured by Shimadzu Corporation).

An aluminum foil was added to the current collector 22 and was folded on the side opposite of the electrode mixture 23 from the second end 22b of the aluminum foil that serves as the current collector 22, and the second end 22b of the aluminum foil was secured to a grip portion 27 on the upper side.

Through a 180° peeling test of pulling the current collector 22 toward the upper side (the direction represented with the reference numeral 28 in Fig. 2B) at the tension speed 100 mm/min, the tension strength (N) of the electrode mixture of the electrode for a secondary battery and the current collector was measured.

The peeling strength (N/m) of the electrode mixture and the current collector was calculated from the tension strength (N) and the electrode width (25 mm).

<BET Specific surface area of positive electrode active material for lithium secondary battery>

After 1g of positive electrode active material powder for a lithium secondary battery was dried at 105°C for 30 minutes in a nitrogen atmosphere, measurement was performed using Macsorb (registered trademark) manufactured by Mountech Co., Ltd.

<BET specific surface area of lithium secondary battery positive electrode>

The BET specific surface area ($m^2/g$) of the lithium secondary battery positive electrode was obtained by a nitrogen adsorption method using a BET specific surface area measurement device (manufactured by Mountech, model name: Macsorb HB1208).

<Measurement of average secondary particle diameter of positive electrode active material for lithium secondary battery>

For measurement of the average secondary particle diameter, a laser diffraction particle size distributer (manufactured by Horiba Ltd., LA-950) was used. 0.1 g of positive electrode active material powder for a lithium secondary battery was poured into 50 ml of an aqueous solution of 0.2% by mass of sodium hexametaphosphate, thereby obtaining a dispersion with the powder dispersed therein. Particle size distribution of the obtained dispersion was measured, and a volume-based cumulative particle size distribution curve was obtained. In the obtained cumulative particle size distribution curve, a value of a particle diameter (D50) when seen from the side of the fine particles at the time of 50% accumulation was regarded as an average secondary particle diameter of the positive electrode active material for a lithium secondary battery.

<Observation of proportion of number of present collapsing secondary particles>

The lithium secondary battery positive electrode manufactured by the method, which will be described later, was worked with an ion milling device (manufactured by Hitachi High-Technologies Corporation, IM4000) to create a section, and the section of the aforementioned positive electrode was observed using a scanning electronic microscope (manufactured by Hitachi High-Technologies Corporation, S-4800). Arbitrary 50 particles were extracted from an image (SEM photo) obtained through SEM observation, and the proportion of the number of present collapsing secondary particles was calculated.

<Measurement of pore distribution of positive electrode active material for lithium secondary batteries based on mercury intrusion method>

As pre-processing, the positive electrode active material for lithium secondary batteries was dried at a constant temperature of 120°C for 4 hours. Measurement of pore distribution was conducted under the following measurement conditions using an Autopore III9420 (manufactured by Micromeritics). Note that the surface tension of mercury was set to 480 dynes/cm and the contact angle between mercury and the sample was set to 140°.

Measurement conditions
Measurement temperature: 25°C
Measurement pressure: 1.07 psia to 59256.3 psia

<Composition analysis>

Composition analysis of the lithium metal composite oxide powder, which were manufactured by the method described later, were conducted using an inductively coupled plasma emission spectrometer (manufactured by Sii Nanotechnology Inc., SPS3000) after the obtained lithium metal composite oxide powder was dissolved in a hydrochloric acid.

<Creation of positive electrode for lithium secondary battery>

The positive electrode active material for a lithium secondary battery obtained by the manufacturing method, which will be described later, a conductive material (acetylene black), and a binder (PVdF#7305) were added and kneaded using a Filmix 30-25 model (manufactured by Primix Corporation) at 5000 rpm for 3 minutes such that the composition of the positive electrode active material for a lithium secondary battery : the conductive material: the binder = 90:5:5 (mass ratio) is satisfied, thereby preparing a positive electrode mixture in a paste form. For preparing the positive electrode mixture, N-methyl-2-pyrrolidone was used as an organic solvent.

The obtained positive electrode mixture in the paste form was applied to an aluminum current collecting foil with the thickness of 20 μm and was dried with warm wind at 90°C. After the drying with the warm wind, the obtained positive electrode was cut into the width of 25 mm and the length of 100 mm and was pressed with a load of 0.3 MPa using a roll presser (manufactured by Tester Sangyo Co., Ltd.). Thereafter, the positive electrode was dried in vacuum at 150°C for 8 hours, thereby obtaining a positive electrode for a peeling strength test. The thickness of the positive electrode mixture layer was about 35 μm, and the amount of the carried positive electrode active material for lithium secondary batteries was 7 mg/cm$^2$ in the obtained positive electrode. The lithium secondary battery positive electrode was punched into an electrode area of 1.65 cm$^2$ and was used for the lithium secondary battery, which will be described later.

<Creation of lithium secondary battery (coin-type half-cell)>

The following operations were conducted in a glove box in an argon atmosphere.

The positive electrode for a lithium secondary battery created in <Creation of positive electrode for lithium secondary battery> was placed on a lower lid of a part for a coin-type battery R2032 (manufactured by Hohsen Corporation) such that the aluminum foil surface was oriented downward, and a laminated film separator was placed thereon (a heat-resistant porous layer was laminated (thickness: 16 μm) on a porous film made of polyethylene). 300 μl of electrolyte solution was poured thereto. As the electrolyte solution, a substance obtained by dissolving LiPF6 in a 30:35:35 (volume ratio) mixture solution of ethylene carbonate (hereinafter, also referred to as EC), dimethyl carbonate (hereinafter, also referred to as DMC), and ethylene methyl carbonate (hereinafter, also referred to as EMC) such that the amount of 1.0 mol/l is satisfied (hereinafter, also represented as $LiPF_6$/EC + DMC + EMC) was used.

Next, the negative electrode is placed on the upper side of the laminated film separator using metal lithium as the negative electrode, and an upper lid was closed via a gasket and was caulked with a caulking machine, thereby creating a lithium secondary battery (coin-type half-cell R2032; hereinafter, also referred to as a "half-cell").

<Charging and discharging test>

The full-cell created in <Creation of lithium secondary battery (coin-type full-cell)> was used to conduct a discharging rate test and a self-discharging test under conditions described below.

<Discharging rate test conditions>

The half-cell created by the aforementioned method at a test temperature of 25°C was charged with a constant current and a constant voltage under conditions of a maximum charging voltage of 4.3 V, a charging time of 6 hours, and a charging current of 0.2 C, and then constant current discharging was performed under conditions of a minimum discharging voltage of 2.5V, a discharging time of 5 hours, and a discharging current of 0.2 CA. After the half-cell was similarly charged, discharging with a constant current was performed at a discharging current of 2 CA. The discharging capacitance in the 2CA discharge with respect to the discharging capacitance in the 0.2 CA discharge was calculated as a discharging rate maintaining rate (%).

<Self-discharging test>

The half-cell created by the aforementioned method is charged with a constant current and a constant voltage under conditions of a test temperature of 25°C, a maximum charging voltage of 4.3 V, a charging time of 6 hours, and a charging current of 0.2 CA. Thereafter, the half-cell was left for 7 days in an atmosphere at 60°C, was then caused to wait for 2 hours at a test temperature of 25°C, and was discharged at a constant current of 0.2 CA at 25°C. A difference between 0.2 CA discharging capacitance before preservation at 60°C and 0.2 CA discharging capacitance after preservation at 60°C was calculated as a self-discharging capacitance.

(Example 1)

1. Manufacturing of positive electrode active material for lithium secondary battery

After water was poured into a reaction tank provided with a stirrer and an overflow pipe, an aqueous solution of sodium hydroxide was added thereto, and a liquid temperature was maintained at 50°C.

An aqueous solution of nickel sulfate, an aqueous solution of cobalt sulfate, and an aqueous solution of manganese sulfate were mixed such that an atomic ratio of nickel atoms, cobalt atoms, and manganese atoms satisfied 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. The air flow rate was adjusted such that a ratio A/B between the air flow rate A (L/min) and a reaction volume B(L) became 0.013, and the reaction tank was caused to be successively ventilated. An aqueous solution of sodium hydroxide was timely dropped such that pH of the solution in the reaction tank became 12.0 at the time of measurement at 40°C, nickel, cobalt, manganese composite hydroxide particles were obtained, were washed with a sodium hydroxide solution, were dehydrated and isolated with a centrifugal separator, and were dried at 105°C, thereby obtaining a nickel, cobalt, manganese composite hydroxide 1.

The nickel, cobalt, manganese composite hydroxide 1 obtained as described above and lithium carbonate powder were weighed and mixed such that a molar ratio of Li/(Ni + Co + Mn) = 1.08 was satisfied, were burned at 760°C for 5 hours in an ambient air atmosphere, and were further burned at 875°C for 10 hours in an ambient air atmosphere, thereby obtaining a target positive electrode active material 1 for lithium secondary batteries.

2. Evaluation of positive electrode active material 1 for lithium secondary battery

Since the composition of the obtained positive electrode active material for a lithium secondary battery was analyzed and caused to correspond to the composition formula (I), x = 0.036, y = 0.211, z = 0.238, and w = 0 were obtained.

The pore peak of the positive electrode active material 1 for a lithium secondary battery measured through the aforementioned measurement of pore distribution based on the mercury intrusion method was 56 nm, D50 was 4.6 μm, and the BET specific surface area was 1.0 $m^2$/g. The proportion of the number of collapsing secondary particles was equal to or greater than 5%.

(Example 2)

1. Manufacturing of positive electrode active material 2 for lithium secondary battery

After water was poured into a reaction tank provided with a stirrer and an overflow pipe, an aqueous solution of sodium hydroxide was added, and a liquid temperature was maintained at 50°C.

An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. The air flow rate was adjusted such that a ratio A/B of the air flow rate A (L/min) and the reaction volume B(L) became 0.011, and the reaction tank was caused to be successively ventilated. An aqueous solution of sodium hydroxide was timely dropped such that pH of the solution in the reaction tank became 12.5 at the time of measurement at 40°C, and nickel, cobalt, manganese composite hydroxide particles were obtained, were washed with a sodium hydroxide solution, were dehydrated and isolated with a centrifugal separator, and were dried at 105°C, thereby obtaining a nickel, cobalt, manganese composite hydroxide 2.

The nickel, cobalt, manganese composite hydroxide 2 obtained as described above and lithium carbonate powder were weighed and mixed such that a molar ratio of Li/(Ni + Co + Mn) = 1.05 was satisfied, were burned at 760°C for 5 hours in an ambient air atmosphere, and were further burned at 875°C for 10 hours in an ambient air atmosphere, thereby obtaining a target positive electrode active material 2 for lithium secondary batteries.

2. Evaluation of positive electrode active material 2 for lithium secondary battery

When the composition of the obtained positive electrode active material 2 for lithium secondary battery was analyzed and was caused to correspond to the composition formula (I), x = 0.025, y = 0.209, z = 0.240, and w = 0 were obtained.

The pore peak of the positive electrode active material 1 for a lithium secondary battery measured through the aforementioned measurement of pore distribution based on the mercury intrusion method was 108 nm, D50 was 6.6 μm, and the BET specific surface area was 1.0 $m^2$/g. The proportion of the number of collapsing secondary particles was equal to or greater than 5%.

(Example 3)

1. Manufacturing of positive electrode active material 3 for lithium secondary battery

After water was poured into a reaction tank provided with a stirrer and an overflow pipe, an aqueous solution of sodium hydroxide was added, and a liquid temperature was maintained at 50°C.

An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. Operations that are similar to those in Example 2 other than that the air flow rate was adjusted such that a ratio A/B of the air flow rate A (L/min) and the reaction volume B(L) became 0.005 and the reaction tank was caused to be successively ventilated, thereby obtaining a nickel, cobalt, manganese composite hydroxide 3.

The nickel, cobalt, manganese composite hydroxide 3 obtained as described above and lithium carbonate powder were weighed and mixed such that a molar ratio of Li/(Ni + Co + Mn) = 1.05 was satisfied, were burned at 760°C for 5 hours in an ambient air atmosphere, and were further burned at 875°C for 10 hours in an ambient air atmosphere, thereby obtaining a target positive electrode active material 3 for lithium secondary batteries.

2. Evaluation of positive electrode active material 3 for lithium secondary battery

When the composition of the obtained positive electrode active material 3 for a lithium secondary battery was analyzed and caused to correspond to the composition formula (I), x = 0.020, y = 0.208, z = 0.240, and w = 0 were obtained.

The pore peak of the positive electrode active material 3 for a lithium secondary battery measured through the aforementioned measurement of pore distribution based on the mercury intrusion method was 108 nm, D50 was 7.1 μm, and the BET specific surface area was 0.62 $m^2/g$. The proportion of the number of collapsing secondary particles was equal to or greater than 5%.

(Example 4)

1. Manufacturing of positive electrode active material 4 for lithium secondary battery

After water was poured into a reaction tank provided with a stirrer and an overflow pipe, an aqueous solution of sodium hydroxide was added thereto, and a liquid temperature was maintained at 50°C.

An aqueous solution of nickel sulfate, an aqueous solution of cobalt sulfate, and an aqueous solution of manganese sulfate were mixed such that the atomic ratio of nickel atoms, cobalt atoms, and manganese atoms became 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. Operations that are similar to those in Example 3 other than that the air flow rate was adjusted such that a ratio A/B of the air flow rate A (L/min) and the reaction volume B(L) became 0.009 and the reaction tank was caused to be successively ventilated, thereby obtaining a nickel, cobalt, manganese composite hydroxide 4.

The nickel, cobalt, manganese composite hydroxide 4 obtained as described above and lithium carbonate powder were weighed and mixed such that a molar ratio of Li/(Ni + Co + Mn) = 1.06 was satisfied, were burned at 760°C for 5 hours in an ambient air atmosphere, and were further burned at 875°C for 10 hours in an ambient air atmosphere, thereby obtaining a target positive electrode active material 4 for lithium secondary batteries.

2. Evaluation of positive electrode active material 4 for lithium secondary battery

When the composition of the obtained positive electrode active material 4 for a lithium secondary battery was analyzed and caused to correspond to the composition formula (I), x = 0.028, y = 0.208, z = 0.241, and w = 0 were obtained.

The pore peak of the positive electrode active material 4 for a lithium secondary battery measured through the aforementioned measurement of pore distribution based on the mercury intrusion method was 89 nm, D50 was 6.7 μm, and the BET specific surface area was 0.77 $m^2/g$. The proportion of the number of collapsing secondary particles was equal to or greater than 5%.

(Example 5)

1. Manufacturing of positive electrode active material 5 for lithium secondary battery

After water was poured into a reaction tank provided with a stirrer and an overflow pipe, an aqueous solution of sodium hydroxide was added thereto, and a liquid temperature was maintained at 50°C.

An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. Operations that are similar to those in Example 4 other than that the air flow rate was adjusted such that a ratio A/B of the air flow rate A (L/min) and the reaction volume B(L) became 0.006 and the reaction tank was caused to be successively ventilated, thereby obtaining a nickel, cobalt, manganese composite hydroxide 5.

The nickel, cobalt, manganese composite hydroxide 5 obtained as described above and lithium carbonate powder were weighed and mixed such that a molar ratio of Li/(Ni + Co + Mn) = 1.10 was satisfied, were burned at 760°C for 5 hours in an ambient air atmosphere, and were further burned at 875°C for 10 hours in an ambient air atmosphere, thereby obtaining a target positive electrode active material 5 for lithium secondary batteries.

2. Evaluation of positive electrode active material 5 for lithium secondary battery

When the composition of the obtained positive electrode active material 5 for lithium secondary battery was analyzed and caused to correspond to the composition formula (I), x = 0.048, y = 0.209, z = 0.242, and w = 0 were obtained.

The pore peak of the positive electrode active material 5 for a lithium secondary battery measured through the aforementioned measurement of pore distribution based on the mercury intrusion method was 71 nm, D50 was 6.6 μm, and the BET specific surface area was 0.62 $m^2/g$. The proportion of the number of collapsing secondary particles was equal to or greater than 5%.

(Comparative Example 1)

1. Manufacturing of positive electrode active material 6 for lithium secondary battery

After water was poured into a reaction tank provided with a stirrer and an overflow pipe, an aqueous solution of sodium hydroxide was added thereto, and a liquid temperature was maintained at 50°C.
An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.
Next, the mixture starting solution and an aqueous solution of ammonium sulfate were successively added as a complexing agent to the reaction tank while being stirred, and nitrogen gas was caused to be successively ventilated. The air flow rate was adjusted such that a ratio A/B between the air flow rate A (L/min) and a reaction volume B(L) became 0.020, and the reaction tank was caused to be successively ventilated. An aqueous solution of sodium hydroxide was timely dropped such that pH of the solution in the reaction tank became 12.4 at the time of measurement at 40°C, nickel, cobalt, manganese composite hydroxide particles were obtained, were washed with a sodium hydroxide solution, were dehydrated and isolated with a centrifugal separator, and were dried at 105°C, thereby obtaining a nickel, cobalt, manganese composite hydroxide 6.
The nickel, cobalt, manganese composite hydroxide 6 obtained as described above and lithium carbonate powder were weighed and mixed such that a molar ratio of Li/(Ni + Co + Mn) = 1.05 was satisfied, were burned at 760°C for 5 hours in an ambient air atmosphere, and were further burned at 875°C for 10 hours in an ambient air atmosphere, thereby obtaining a target positive electrode active material 6 for a lithium secondary battery.

2. Evaluation of positive electrode active material 6 for lithium secondary battery

When the composition of the positive electrode active material 6 for a lithium secondary battery was analyzed and caused to correspond to the composition formula (I), x = 0.024, y = 0.208, z = 0.241, and w = 0 were obtained.
The pore peak of the positive electrode active material 6 for a lithium secondary battery measured through the aforementioned measurement of pore distribution based on the mercury intrusion method was 108 nm, D50 was 3.6 μm, and the BET specific surface area was 1.9 $m^2/g$. The proportion of the number of collapsing secondary particles was equal to or greater than 5%.

(Comparative Example 2)

1. Manufacturing of positive electrode active material 7 for lithium secondary battery

After water was poured into a reaction tank provided with a stirrer and an overflow pipe, an aqueous solution of sodium hydroxide was added thereto, and a liquid temperature was maintained at 50°C.
An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.
Next, the mixture starting solution and an aqueous solution of ammonium sulfate were successively added as a complexing agent to the reaction tank while being stirred, and nitrogen gas was caused to be successively ventilated. The air flow rate was adjusted such that a ratio A/B between the air flow rate A (L/min) and a reaction volume B(L) became 0.025, and the reaction tank was caused to be successively ventilated. An aqueous solution of sodium hydroxide was timely dropped such that pH of the solution in the reaction tank became 12.5 at the time of measurement at 40°C, nickel, cobalt, manganese composite hydroxide particles were obtained, were washed with a sodium hydroxide solution, were dehydrated and isolated with a centrifugal separator, and were dried at 105°C, thereby obtaining a nickel, cobalt, manganese composite hydroxide 7.
The nickel, cobalt, manganese composite hydroxide 7 obtained as described above and lithium carbonate powder were weighed and mixed such that a molar ratio of Li/(Ni + Co + Mn) = 1.06 was satisfied, were burned at 760°C for 5 hours in an ambient air atmosphere, and were further burned at 875°C for 10 hours in an ambient air atmosphere, thereby obtaining a target positive electrode active material 7 for a lithium secondary battery.

2. Evaluation of positive electrode active material 7 for lithium secondary battery

When the composition of the positive electrode active material 7 for a lithium secondary battery was analyzed and caused to correspond to the composition formula (II), x = 0.029, y = 0.210, z = 0.241, and w = 0 were obtained.

The pore peak of the positive electrode active material 7 for a lithium secondary battery measured through the aforementioned measurement of pore distribution based on the mercury intrusion method was 108 nm, D50 was 5.7 μm, and the BET specific surface area was 2.6 $m^2/g$. The proportion of the number of collapsing secondary particles was equal to or greater than 5%.

(Comparative Example 3)

1. Manufacturing of positive electrode active material 8 for lithium secondary battery

After water was poured into a reaction tank provided with a stirrer and an overflow pipe, an aqueous solution of sodium hydroxide was added thereto, and a liquid temperature was maintained at 50°C.

An aqueous solution of nickel sulfate, an aqueous solution of cobalt sulfate, and an aqueous solution of manganese sulfate were mixed such that an atomic ratio of nickel atoms, cobalt atoms, and manganese atoms became 0.55:0.21:0.24, thereby preparing a mixture starting solution.

Next, the mixture starting solution and an aqueous solution of ammonium sulfate were successively added as a complexing agent to the reaction tank while being stirred, and nitrogen gas was caused to be successively ventilated. An aqueous solution of sodium hydroxide was timely dropped such that pH of the solution in the reaction tank became 13.0 at the time of measurement at 40°C, nickel, cobalt, manganese composite hydroxide particles were obtained, were washed with a sodium hydroxide solution, were dehydrated and isolated with a centrifugal separator, and were dried at 105°C, thereby obtaining a nickel, cobalt, manganese composite hydroxide 8.

The nickel, cobalt, manganese composite hydroxide 8 obtained as described above and lithium carbonate powder were weighed and mixed such that a molar ratio of Li/(Ni + Co + Mn) = 1.06 was satisfied, were burned at 760°C for 5 hours in an ambient air atmosphere, were further burned at 875°C for 10 hours in an ambient air atmosphere, and were additionally burned at 900°C for 10 hours in an ambient air atmosphere, thereby obtaining a target positive electrode active material 8 for lithium secondary batteries.

2. Evaluation of positive electrode active material 8 for lithium secondary battery

When the composition of the obtained positive electrode active material 8 for a lithium secondary battery was analyzed and caused to correspond to the composition formula (I), x = 0.031, y = 0.207, z = 0.236, and w = 0 were obtained.

The pore peak of the positive electrode active material 8 for a lithium secondary battery measured through the aforementioned measurement of pore distribution based on the mercury intrusion method was not observed, D50 was 5.5 μm, and the BET specific surface area was 0.55 $m^2/g$. Substantially no collapsing secondary particles were observed, and the proportion thereof was significantly below 5%.

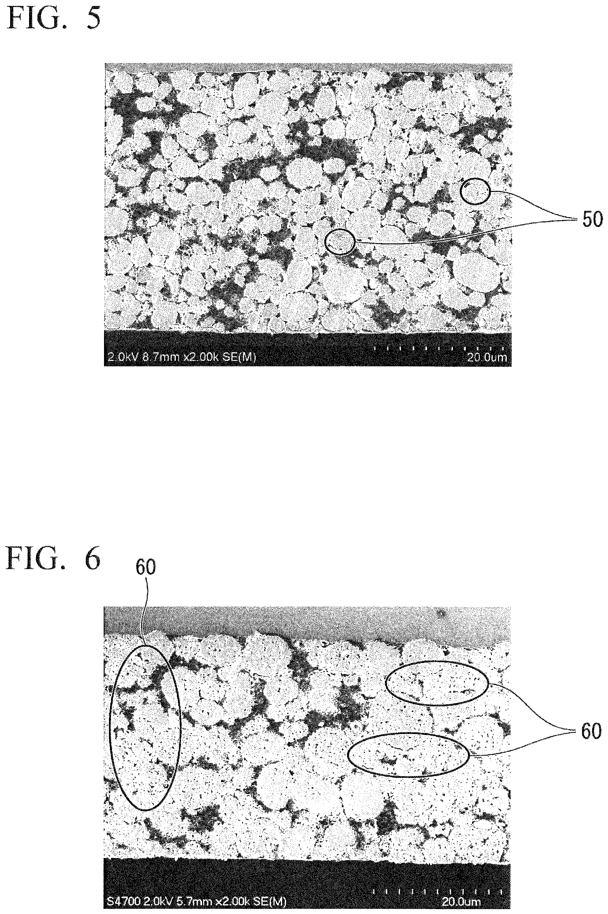

Figs. 5 and 6 show SEM photos obtained by observing presence of collapse of the secondary particles. Fig. 5 shows the positive electrode active material in Comparative Example 3, and Fig. 6 shows the positive electrode active material in Example 3.

As shown in Fig. 5, the amount of collapsing particles was small, and collapse was slightly observed at the location represented with the reference numeral 50 in the positive electrode active material in Comparative Example 3. Meanwhile, collapse of the particles was observed in the wide range represented with the reference numeral 60 in the positive electrode active material in Example 3.

The following Table 1 shows results of measuring (1) and (2) described below, the average secondary particle diameters (D50), the numbers of collapsing secondary particles, BET specific surface areas, pore radii of the pore peaks, rate properties, and self-discharging:

(1) 180-degree peeling strength between the current collector and the electrode mixture layer (described as "peeling strength" in Table 1); and

(2) The BET specific surface area of the electrode mixture layer (described as "electrode BET" in Table 1).

[Table 1]

| | Peeling strength (N/m) | Electrode BET ($m^2/g$) | D50 (μm) | Number of collapsing secondary particles | Positive electrode material BET ($m^2/g$) | Pore peak (nm) | Rate properties (%) | Self-discharging (mAh/g) |
|---|---|---|---|---|---|---|---|---|
| Example 1 | 189 | 7.2 | 4.6 | 5% or more | 1.0 | 56 | 92.5 | 39 |

(continued)

| | Peeling strength (N/m) | Electrode BET ($m^2/g$) | D50 (μm) | Number of collapsing secondary particles | Positive electrode material BET ($m^2/g$) | Pore peak (nm) | Rate properties (%) | Self-discharging (mAh/g) |
|---|---|---|---|---|---|---|---|---|
| Example 2 | 214 | 5.1 | 6.6 | 5% or more | 1.0 | 108 | 91.9 | 39 |
| Example 3 | 272 | 5.1 | 7.1 | 5% or more | 0.62 | 108 | 92.7 | 39 |
| Example 4 | 194 | 5.9 | 6.7 | 5% or more | 0.77 | 89 | 92.4 | 40 |
| Example 5 | 279 | 5.8 | 6.6 | 5% or more | 0.84 | 71 | 90.2 | 37 |
| Comparative Example 1 | 135 | 11.8 | 3.6 | 5% or more | 1.9 | 108 | 93.0 | 47 |
| Comparative Example 2 | 35 | 9.0 | 5.7 | 5% or more | 2.6 | 108 | 92.1 | 45 |
| Comparative Example 3 | 210 | 2.1 | 5.5 | Less than 5% | 0.55 | None | 88.5 | 41 |

As shown above in the results in Table 1, all the rate properties were equal to or greater than 90%, and the self-discharging capacitances were also reduced to be equal to or less than 40 mAh/g, in Examples 1 to 5 to which the invention was applied.

In contrast, the self-discharging capacitance significantly exceeded 40 mAh/g in Comparative Examples 1 and 2 to which the invention was not applied, and the rate property was as low as 88.5% in Comparative Example 3.

[Industrial Applicability]

According to the invention, it is possible to provide a lithium secondary battery positive electrode with high rate properties and a small self-discharging amount and a lithium secondary battery that has the lithium secondary battery positive electrode.

[Reference Signs List]

1 Separator
2 Positive electrode
3 Negative electrode
4 Electrode group
5 Battery case
6 Electrolyte solution
7 Top insulator
8 Sealing body
10 Lithium secondary battery
21 Positive electrode lead
31 Negative electrode lead

## Claims

**1.** A lithium secondary battery positive electrode,
wherein an electrode mixture layer that includes a positive electrode active material for a lithium secondary battery including secondary particles obtained by aggregating primary particles capable of being doped and de-doped with lithium ions, a conductive material, and a binding agent and a current collector are laminated, and requirements (1) and (2) below are satisfied:

(1) 180-degree peeling strength between the current collector and the electrode mixture layer is equal to or greater than 140 N/m; and
(2) a BET specific surface area of the electrode mixture layer is equal to or greater than 4.0 $m^2/g$ and equal to or less than 8.5 $m^2/g$.

**2.** The lithium secondary battery positive electrode according to claim 1, wherein the positive electrode active material for a lithium secondary battery is represented by a composition formula (I) below:

$$Li[Li_x(Ni_{(1-y-z-w)}Co_yMn_zM_w)_{1-x}]O_2 \cdots \quad (I)$$

(where M represents one or more elements selected from the group consisting of Fe, Cu, Ti, Mg, Al, W, B, Mo, Nb, Zn, Sn, Zr, Ga, and V, $0 \leq x \leq 0.2$, $0 < y \leq 0.4$, $0 \leq z \leq 0.4$, and $0 \leq w \leq 0.1$ are satisfied).

**3.** The lithium secondary battery positive electrode according to claim 1 or 2, wherein an average secondary particle diameter of the positive electrode active material for a lithium secondary battery is equal to or greater than 3 μm and equal to or less than 15 μm.

**4.** The lithium secondary battery positive electrode according to any one of claims 1 to 3, wherein the number of secondary particles with the positive electrode active material collapsing in the electrode mixture layer is equal to or greater than 5%.

**5.** The lithium secondary battery positive electrode according to any one of claims 1 to 4, wherein the BET specific surface area of the positive electrode active material for a lithium secondary battery is equal to or greater than 0.5 $m^2/g$ and equal to or less than 1.5 $m^2/g$.

**6.** The lithium secondary battery positive electrode according to any one of claims 1 to 5, wherein the positive electrode active material for a lithium secondary battery has a pore peak within a range of pore radii of equal to or greater than 10 nm and equal to or less than 200 nm in measurement of pore distribution obtained on the basis of a mercury intrusion method.

**7.** The lithium secondary battery positive electrode according to any one of claims 1 to 6, wherein the binding agent includes fluorine-based resin.

**8.** A lithium secondary battery comprising:
the lithium secondary battery positive electrode according to any one of claims 1 to 7.

FIG. 1A

4
21
2
3
31
1

FIG. 1B

8
6
7
10
21
4
5

FIG. 2A

201
22
22b
23b
23
23a
l3
l1
l5
l4
l2
22a

FIG. 2B

28
22b
27
22
22a
23a
25a
201
24
25
23
23b
26
25b

FIG. 3

301
302
303

FIG. 4

301
302
303

FIG. 5

50
2.0kV 8.7mm x2.00k SE(M)
20.0um

FIG. 6

60
60
S4700 2.0kV 5.7mm x2.00k SE(M)
20.0um

## INTERNATIONAL SEARCH REPORT

International application No. PCT/JP2017/039297

A. CLASSIFICATION OF SUBJECT MATTER
Int.Cl. H01M4/131(2010.01)i, H01M4/13(2010.01)i, H01M4/505(2010.01)i, H01M4/525(2010.01)i, H01M4/62(2006.01)i

According to International Patent Classification (IPC) or to both national classification and IPC

B. FIELDS SEARCHED

Minimum documentation searched (classification system followed by classification symbols)
Int.Cl. H01M4/131, H01M4/13, H01M4/505, H01M4/525, H01M4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 7-122262 A (TORAY INDUSTRIES, INC.) 12 May 1995, claims, abstract, paragraphs [0015], [0017], [0023], [0024] (Family: none) | 1-3, 5-8<br>4 |
| Y | JP 2009-43703 A (NISSAN MOTOR CO., LTD., KUREHA CORP.) 26 February 2009, paragraphs [0012]-[0014] & WO 2009/011181 A1 | 1-3, 5-8 |
| Y | WO 2014/007360 A1 (SUMITOMO CHEMICAL CO., LTD.) 09 January 2014, specification, pp. 17, 18 (Family: none) | 3, 5, 7, 8 |
| Y | JP 2007-257985 A (SUMITOMO METAL MINING CO., LTD., TOYOTA MOTOR CORP., DENSO CORP.) 04 October 2007, claim 1, paragraph [0053] & US 2007 /0248883 A1, claim 1, paragraph [0058]& EP 1837936 A2 & CN 101047237 A | 6-8 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 19 January 2018 (19.01.2018) | 30 January 2018 (30.01.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016213837 A
- JP 2002298928 A
- JP 4354214 B
- WO 2011010421 A
- JP 2009129889 A
- JP 2009043703 A
- JP 2002201028 A